(19) Europäisches Patentamt
European Patent Office
Office européen des brevets

(11) **EP 1 989 505 B1**

(12) **FASCICULE DE BREVET EUROPEEN**

(45) Date de publication et mention
de la délivrance du brevet:
**21.07.2010 Bulletin 2010/29**

(21) Numéro de dépôt: 07731081.1

(22) Date de dépôt: **02.03.2007**

(51) Int Cl.:
*G01D 5/16* (2006.01)     *G01B 7/00* (2006.01)

(86) Numéro de dépôt international:
**PCT/FR2007/000382**

(87) Numéro de publication internationale:
**WO 2007/099238 (07.09.2007 Gazette 2007/36)**

(54) **CAPTEUR DE POSITION A DIRECTION D'AIMANTATION VARIABLE ET PROCEDE DE REALISATION**

POSITIONSSENSOR MIT VERÄNDERLICHER MAGNETISIERUNGSRICHTUNG UND PRODUKTIONSVERFAHREN

POSITION SENSOR WITH VARIABLE DIRECTION OF MAGNETIZATION AND METHOD OF PRODUCTION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **02.03.2006 FR 0601877**

(43) Date de publication de la demande:
**12.11.2008 Bulletin 2008/46**

(73) Titulaire: **Moving Magnet Technologies "M.M.T."
25000 Besançon (FR)**

(72) Inventeurs:
• **JERANCE, Nikola
F-25000 Besançon (FR)**
• **ARLOT, Richard
F-70700 Bonnevent Velloreille (FR)**

(74) Mandataire: **Novagraaf Technologies
122, rue Edouard Vaillant
92593 Levallois-Perret Cedex (FR)**

(56) Documents cités:
**EP-A- 1 074 818     WO-A-00/04339
DE-U1- 20 210 548     US-B1- 6 545 463**

**Description**

La présente invention concerne le domaine des capteurs de position magnétiques comportant au moins un aimant permanent.

La présente invention se propose d'utiliser plus particulièrement un aimant permanent comportant une direction d'aimantation variable suivant la direction du déplacement.

Les capteurs qui détectent la position à partir d'un champ magnétique ont de nombreux avantages :

- pas de contact mécanique avec la partie mobile, et donc pas d'usure,
- insensibilité à la saleté,
- coût de production réduit,
- longue durée de vie.

Il est aussi intéressant d'éliminer (si possible) des inconvénients présents dans certains capteurs magnétiques, tels que la dépendance à l'hystérésis dû aux pièces ferromagnétiques et à l'induction rémanente de l'aimant permanent (cette induction dépend ainsi des variations de température et doit être dans certains cas compensée, et de plus diminue de manière irréversible dans le temps à cause du vieillissement de l'aimant).

On connaît, dans l'état de la technique, le brevet FR2691534 de capteur de position linéaire, mais l'encombrement et la longueur de l'aimant utilisé limitent l'utilisation pratique de ce capteur pour les grandes courses. Ce capteur présente également une hystérésis due aux stators ferromagnétiques et la mesure dépend de la variation de l'induction rémanente qui doit être compensée.

On connaît également le brevet US06211668 de capteur de position linéaire, mais la variation de champ magnétique dans ce capteur est directement liée à ces dimensions, ce qui limite sa réalisation pratique pour les grandes courses. Ce capteur mesure aussi l'intensité du champ magnétique, ce qui le rend dépendant de la variation de l'induction rémanente de l'aimant permanent par rapport à la température et au temps.

On connaît, dans l'état de la technique, les brevets US6731108, US6960974 et WO2004/01537 qui permettent la mesure du déplacement linéaire d'un aimant par rapport à un ou plusieurs éléments magnétosensibles. Cependant, pour une réalisation pratique des courses supérieures à 20-25 mm, ces capteurs nécessitent plusieurs sondes placées sur les différentes parties de la course, ce qui augmente le coût du capteur et nécessite un positionnement précis des sondes.

D'autre part, le document n° US 6,545,463 décrit un capteur de déplacement dans lequel l'aimant présente une direction d'aimantation appartenant à un plan de section de l'aimant et qui est perpendiculaire à la direction de déplacement de la mesure. Le document n° EP 1074 818 présente un capteur de déplacement dans lequel l'aimant présente une direction d'aimantation qui varie de façon non linéaire. Et le document n° WO 00/04339 présente un capteur de déplacement présentant une pluralité d'aimant dotés d'une aimantation traditionnelle.

Ces réalisations ne permettent pas de mesurer un déplacement sur de grandes courses linéaires ou angulaires.

La présente invention se propose de remédier à tout ou partie des problèmes cités ci-dessus en proposant un capteur magnétique de déplacement rotatif, linéaire ou curviligne utilisant au moins un aimant permanent et au moins un élément magnétosensible, mobiles l'un par rapport à l'autre, caractérisé en ce que l'aimant présente une direction d'aimantation qui varie sensiblement linéairement suivant la direction de déplacement de l'aimant sur une surface définie par ladite direction de déplacement et une direction normale, à l'exclusion d'une aimantation diamétrale dans le cas d'un capteur rotatif.

De préférence, l'aimant est constitué par un aimant engendrant un champ magnétique dont la composante normale (Y) d'une part, et au moins l'une des composantes tangentielle (X) ou transversale (z) d'autre part, mesurées à la surface de l'aimant, varie périodiquement avec N périodes sur la course de déplacement, N étant un nombre entier.

L'invention concerne, selon un mode de réalisation préféré, un capteur de grande course linéaire. Pour ce faire on utilise un aimant mobile de longueur correspondant sensiblement à la course utile dont l'aimantation varie de manière sensiblement linéaire selon la direction de déplacement. Au voisinage de cet aimant, cette aimantation engendre un champ magnétique dont les composantes tangentielle (X), normale (Y) et transversale (Z) par rapport à l'aimant, sont sensiblement sinusoïdales, sur une grande partie de course. Les composantes Y et Z ont la même phase, alors que la composante X est déphasée d'un quart de période.

Si l'on mesure les composantes X et Y dans un point de l'espace qui entoure l'aimant, il est possible de connaître la position linéaire de l'aimant, en appliquant la formule suivante:

$$x = \arctan\left(\frac{B_{x\,max}}{B_{y\,max}}\frac{B_y}{B_x}\right)$$

où :

x - position linéaire,

$B_x$ - composante tangentielle du champ magnétique,

$$B_{x\,max} \; - \; \text{amplitude de } B_x,$$

$B_y$ - composante normale du champ magnétique,

$$B_{y\,max} \; - \; \text{amplitude de } B_y.$$

Dans un cas plus général, on peut utiliser la formule suivante :

$$x(t) = \arctan\left(\frac{B_{x\,max}}{B_{yz\,max}}\frac{B_{yz}}{B_x}\right)$$

où :

x - position linéaire,

$B_x$ - composante tangentielle du champ magnétique,

$$B_{x\,max} \; - \; \text{amplitude de } B_x,$$

$B_{yz\,max}$ - amplitude de $B_{yz}$ avec

$$B_{yz} = k_y \cdot B_y + k_z \cdot B_z$$

où :

$B_y$ - composante normale du champ magnétique,

$B_z$ - composante transversale du champ magnétique.

Dans un cas général, le décodage de la position linéaire de l'aimant, à partir de ces deux composantes dont les amplitudes sont en général différentes, nécessite de normaliser les deux composantes utilisées pour pouvoir faire le calcul de l'arc tangente pour en déduire la position linéaire. Ces fonctions d'arc tangente et de normalisation sont réalisées soit par un élément séparé ou directement par une sonde (par exemple : MELEXIS 90316) intégrant la mesure des deux composantes du champ, le calcul d'arc tangente et la normalisation des deux composantes du champ. Il est possible de faire des développements particuliers où $B_{xmax}$ et $B_{yz\,max}$ auraient sensiblement les mêmes valeurs, en choisissant convenablement la position et l'orientation de la sonde.

Dans le capteur présenté, il est possible d'obtenir l'angle du champ magnétique proportionnel au déplacement, il suffit d'incliner le plan de mesure par rapport au plan d'aimantation. De cette manière, on a :

$$B_{y1} = B_y \cos(\theta) - B_z \sin(\theta)$$

$$B_{x1} = B_x$$

Où

$B_{x1}, B_{y1}$ - composantes de l'induction magnétique dans le plan de mesure,
$B_x$ - composante tangentielle de l'induction magnétique,
$B_y$ - composante normale de l'induction magnétique,
$B_z$ - composante axiale de l'induction magnétique,
$\theta$ - angle d'inclinaison de la sonde.

Maintenant nous pouvons appliquer la même formule, mais avec les composantes du champ dans le plan de mesure :

$$X = \arctan(g \cdot \frac{B_{y1}}{B_{x1}})$$

où

X - déplacement linéaire ou rotatif mesuré,
$B_{x1}, B_{y1}$ - composantes de l'induction magnétique dans le plan de mesure,
g - gain qui permet de compenser la différence des amplitudes.

Cette configuration permet de régler le gain à appliquer avant le calcul de l'arctangente.

Si les amplitudes des deux composantes du champ magnétique dans le plan de mesure $B_{x1}$, $B_{y1}$ sont égales, ces signaux représentent deux sinusoïdes en quadrature, donc l'angle du champ mesuré suit le déplacement.

Il est ainsi possible, en ajustant l'angle d'inclinaison $\theta$, de mesurer le déplacement directement en calculant

$\arctan(\frac{B_{y1}}{B_{x1}})$ , sans appliquer un gain pour compenser la différence des amplitudes.

Dans l'état de la technique, on connaît des sondes magnétorésistives qui permettent de mesurer l'angle du champ magnétique. Elles comportent deux ponts de Wheatstone, dont les sorties, pour une amplitude suffisante du champ magnétique, dépendent uniquement de l'angle du champ magnétique, selon la formule :

$$V_A = S \cdot \cos(2\alpha)$$

$$V_B = S \cdot \sin(2\alpha)$$

Où

$\alpha$ - angle du champ magnétique,
$V_A$ - tension de sortie du premier pont de Wheatstone,
$V_B$ - tension de sortie du deuxième pont de Wheatstone.

On peut obtenir directement la direction du champ magnétique, et donc le déplacement, selon la formule :

$$\alpha = \frac{1}{2}\arctan(\frac{V_B}{V_A})\ .$$

La réalisation pratique de ce capteur peut être faite avec la sonde qui se déplace suivant l'axe X, devant un aimant immobile, ou avec l'aimant mobile et la sonde fixe, la première solution prenant par exemple moins de place et la deuxième permettant un assemblage plus aisé.

L'avantage de cette invention est tout d'abord la course obtenue : elle dépend uniquement des dimensions de l'aimant. Le résultat de mesure ne dépend pas de l'induction rémanente de l'aimant, ni de son évolution en fonction de la température, ce qui évite de faire la compensation de cette variation en température. L'avantage économique est la structure simple du capteur (une sonde en face d'un aimant monté si nécessaire sur une culasse ferromagnétique, éventuellement encastré). Comme le traitement des signaux mesurés correspond à un calcul d'angle, il est possible d'utiliser des sondes normalement utilisées pour les capteurs de position angulaire (ex : MLX90316), avec toutes les corrections éventuelles de non linéarité utilisées dans ces capteurs. Si on utilise les composantes X et Y pour mesurer le déplacement, ce capteur est insensible aux décalages (modérés) suivant les axes Y et Z, ce qui est très avantageux en terme de production et d'utilisation (robustesse du capteur) et permet de réduire sensiblement les coûts.

L'aimantation décrite ci-dessus serait difficile à réaliser avec les moyens habituels dans la production de capteurs magnétiques. Notamment, il est difficile de créer un champ magnétisant qui tourne en fonction de la position. Pour remédier à cela, nous allons décrire un procédé avec un aimant flexible qui permet de mettre en oeuvre ce type d'aimantation, d'une façon simple et facile à réaliser.

L'aimant permanent est aimanté sur le pourtour d'un support de forme cylindrique, ce support ne présentant pas de propriétés magnétiques (ce qui facilite par ailleurs la manipulation de l'aimant). L'aimant permanent utilisé est, en général, un aimant terre rare ou ferrite mélangé avec un liant plastique souple (ou un assemblage déformable d'aimant non souples). Dans le cas le plus simple, c'est un aimant isotrope - cela permet d'orienter les lignes de champ avec la géométrie du support. Le champ appliqué pendant l'aimantation est uniforme ou quasi-uniforme, ce qui est facile à obtenir dans une bobine dimensionnée de manière judicieuse.

L'aimant est, ensuite, déplié suivant la longueur et mis a plat. L'aimantation obtenue varie linéairement avec la position et les composantes du champ magnétique autour de l'aimant permettent d'appliquer la technique de mesure décrite ci-dessus.

Afin de diminuer les effets de bord, et selon un mode de réalisation préféré, on peut placer l'aimant dans la bobine de façon à avoir l'aimantation suivant l'axe X sur les bords, une fois l'aimant déplié. Pour augmenter l'amplitude de champ magnétique mesuré, on peut ensuite monter l'aimant sur une culasse ferromagnétique.

L'aimantation obtenue à partir d'une bobine au sein de l'aimant peut présenter une erreur angulaire par rapport à une aimantation idéale souhaitée (par exemple : diamétrale parfaite), à cause de la courbure des lignes de champ à la surface de l'aimant. Pour corriger ce défaut, il est possible d'utiliser un profil d'aimantation légèrement corrigé (exemple : elliptique) ou d'appliquer une fonction de transfert non linéaire à la sortie du capteur, ce qui est une option déjà intégrée dans certains circuits de mesure (exemple : MLX90316).

Une partie des problèmes expliqués pour les capteurs de position linéaires existe dans le cas des capteurs magnétiques rotatifs. Par exemple, il est toujours intéressant d'éliminer l'influence de l'induction rémanente de l'aimant. Dans certains cas, l'élément magnétosensible est placé en dehors de l'axe de rotation (par exemple, s'il existe un arbre traversant dans l'application). Dans ces cas, l'avantage du capteur proposé par cette invention est d'utiliser un aimant de longueur sensiblement égale à la longueur de la course utile. Les capteurs rotatifs de grande course (proche de 360 degrés) sont souvent peu pratiques pour les petites courses (leur précision n'est pas suffisante). L'avantage apporté par la présente invention est le fait que la direction d'aimantation présente une variation proche de 360 degrés sur la course utile, pour un procédé d'aimantation adapté.

Pour faire un capteur de position angulaire ou curviligne à partir du capteur linéaire présenté ci-dessus, il suffit d'exploiter la souplesse de l'aimant utilisé pour courber la course du capteur présenté. Dans ce cas, il est, par exemple, possible de monter l'aimant sur une culasse dont le diamètre est plus grand que le diamètre du support d'aimantation. De cette façon, on obtient un capteur de position angulaire avec une course inférieure à 360 degrés utilisant la même technique de calcul de position, avec une rotation de champ mesuré proche de 360 degrés, ce qui améliore la résolution du capteur.

Un problème pratique se pose dans certains procédés d'assemblage où la position de course mesurée n'est pas connue à l'avance. Ce problème est résolu d'une façon simple en utilisant la présente invention. Il suffit d'enrouler un aimant plusieurs fois sur le support d'aimantation. Une fois déplié, il comporte plusieurs périodes d'angle d'aimantation. Cela permet d'obtenir une course angulaire répétée plusieurs fois suivant la longueur de l'aimant. Il est facilement possible d'introduire une ou plusieurs singularités (des périodes d'aimantation plus ou moins longues). Cela peut, par exemple, être utile pour les capteurs incrémentaux. Dans tout ces cas, il est, bien entendu, possible d'obtenir le même résultat en utilisant plusieurs aimants.

Un montage particulier permettrait la mesure de position en utilisant plusieurs pistes avec des aimantations différentes pour une même position.

Dans un autre mode de réalisation, on peut utiliser deux sondes, mesurant la même composante du champ magnétique pour la même position, en utilisant la symétrie de l'aimant. Cela peut être utile pour annuler ou diminuer l'influence d'un champ magnétique extérieur.

Une autre manière de réaliser l'aimantation souhaitée à partir du principe décrit par la présente invention, est d'utiliser un assemblage déformable d'aimants non souples, par exemple des aimants collés sur un support déformable, ce qui permettrait d'obtenir une variation d'angle d'aimantation en pliant le support.

L'invention sera mieux comprise à la lecture de la description qui suit en faisant référence aux dessins où :

- la figure 1 représente l'aimantation décrite par la présente invention,

- la figure 2 représente un mode de réalisation où le capteur est composé d'un aimant et d'une sonde,

- la figure 3 représente le champ magnétique obtenu avec l'aimantation décrite par la présente invention,

- la figure 4 représente le capteur dans un autre mode de réalisation comprenant un aimant monté sur une culasse ferromagnétique,

- la figure 5 représente un procédé décrit par la présente invention pour aimanter l'aimant souple dans une bobine,

- la figure 6 représente le dépliage de l'aimant,

- la figure 7 représente un capteur qui mesure la composante normale en deux points,

- la figure 8 représente un capteur qui mesure la composante tangentielle en deux points,

- la figure 9 représente un capteur qui mesure la composante tangentielle et la composante normale en un seul point avec deux sondes,

- la figure 10 représente une réalisation de capteur curviligne,

- les figures 11a et 11b représentent l'aimant pour un capteur rotatif dont la course utile est proche de 90 degrés,

- la figure 12 représente un aimant enroulé quatre fois autour du support d'aimantation,

- la figure 13 représente le montage de l'aimant de la figure 12 dans un capteur de position linéaire,

- la figure 14 représente le montage de l'aimant de la figure 12 dans un capteur rotatif,

- la figure 15 l'aimantation qui crée une période de longueur différente,

- la figure 16 représente le capteur avec un aimant monté sur un support curviligne,

- la figure 17 représente un capteur avec trois aimants et trois sondes,

- la figure 18 représente un capteur redondant,

- la figure 19 représente une réalisation du capteur avec l'aimant courbé suivant la largeur,

- la figure 20 représente une autre réalisation du capteur avec l'aimant courbé suivant la largeur,

- la figure 21 représente l'épanouissement des lignes de champ magnétique dans le cas d'un capteur linéaire,

- la figure 22 représente une autre réalisation du capteur avec l'utilisation de pièces ferromagnétiques en fin de course,

- la figure 23 représente une autre réalisation du capteur avec inclinaison de la sonde de mesure,

- les figures 24 et 25 représentent une autre réalisation du capteur avec l'utilisation d'un blindage aux champs magnétiques extérieurs.

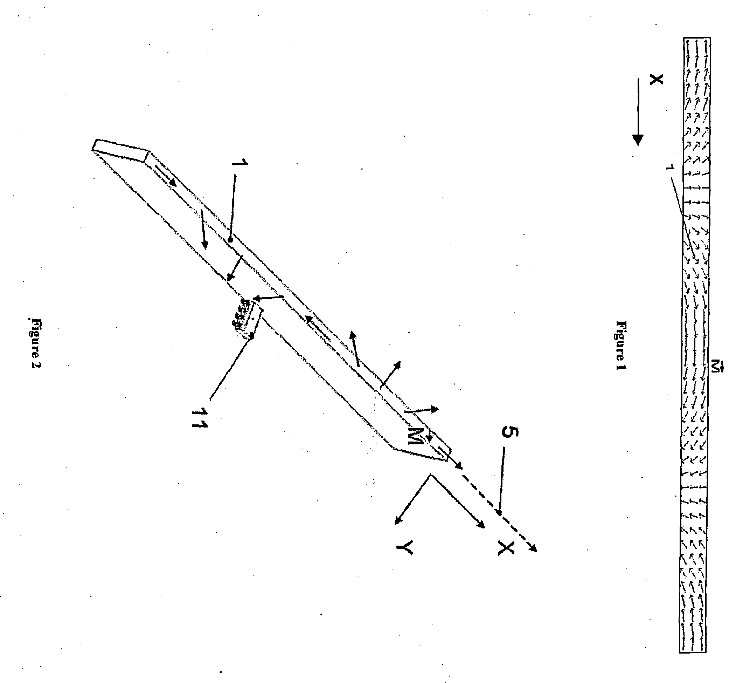

La figure 1 représente un aimant (1) ayant une aimantation, représentée par le vecteur M, dont la direction varie linéairement suivant la longueur de l'aimant dans un plan défini par la direction de déplacement X et une normale à cette direction. Comme on peut le constater, les lignes de champ à l'intérieur de l'aimant sont non colinéaires, ce qui constitue un des principes de base de ladite invention.

La figure 2 montre la structure minimale du capteur : l'aimant (1) qui se déplace par rapport à une sonde (11) suivant la direction de déplacement (5) qui définit l'axe X, l'axe Y étant défini comme la normale à la surface de l'aimant.

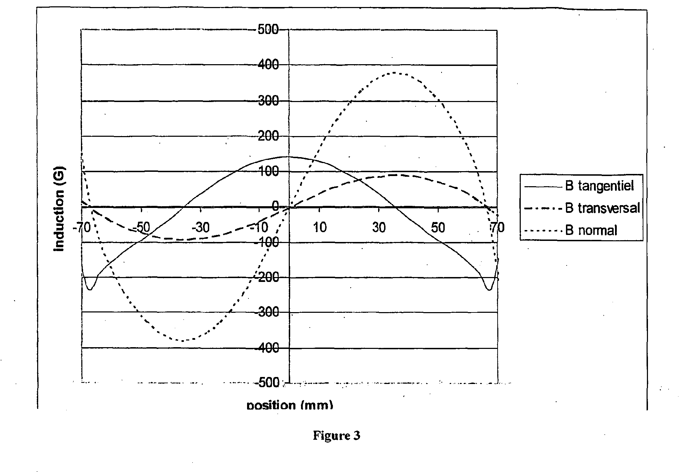

La figure 3 représente les composantes tangentielle, normale et transversale engendrées dans un point au voisinage de l'aimant (1). Les composantes Y et Z ont la même phase, alors que la composante X est déphasée d'un quart de période.

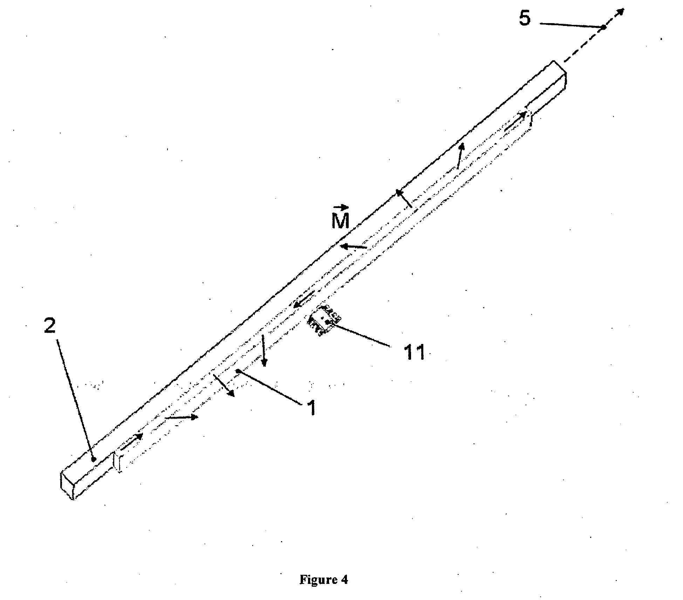

La figure 4 représente l'aimant (1) monté sur une culasse ferromagnétique (2), qui se déplace par rapport à une sonde (11).

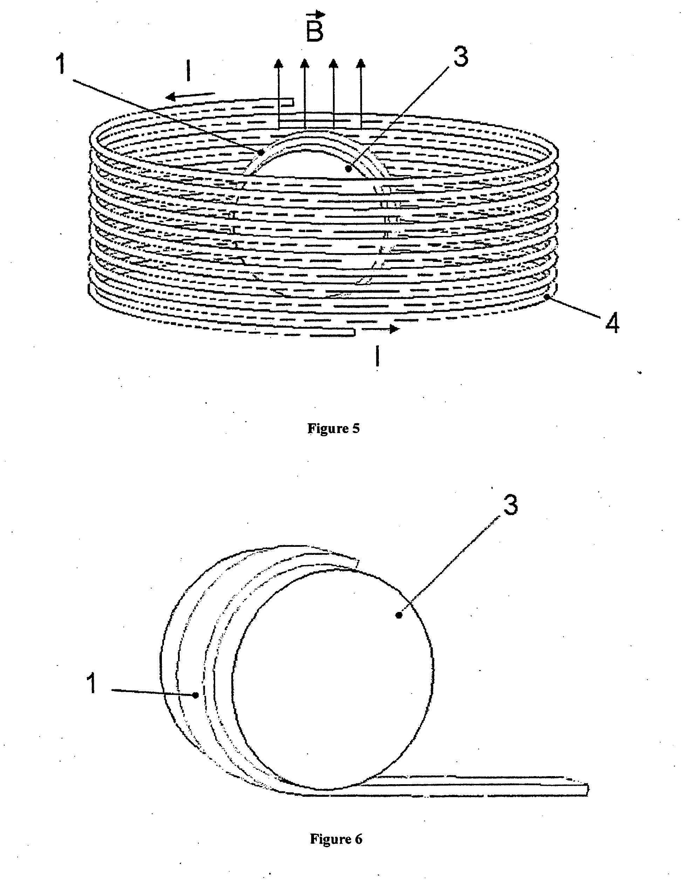

La figure 5 représente le procédé d'aimantation de l'aimant (1), qui est enroulé autour d'un support (3) de forme cylindrique, ce support ne présentant pas de propriétés magnétiques. L'ensemble est placé dans une bobine (4) qui crée un champ magnétique sensiblement uniforme.

La figure 6 représente l'aimant (1), déroulé suivant l'axe X (en longueur) et mis a plat pour obtenir une variation des lignes de champ magnétique suivant le déplacement mesuré.

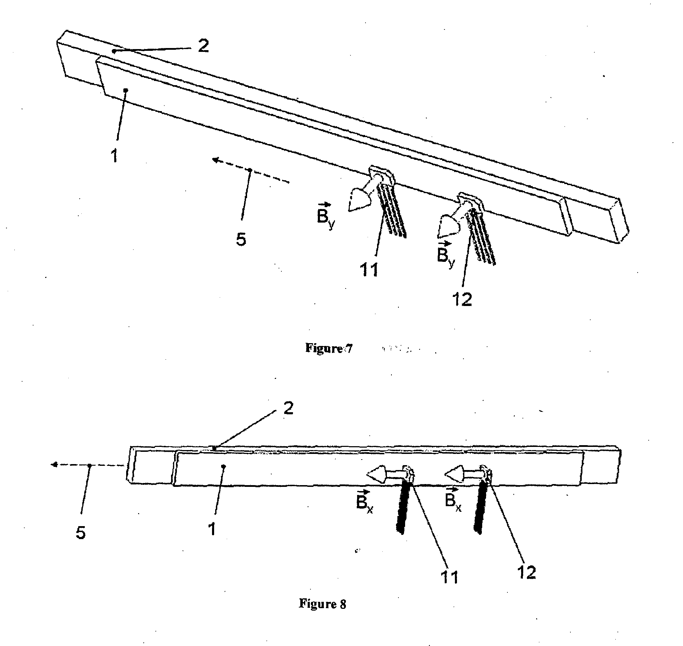

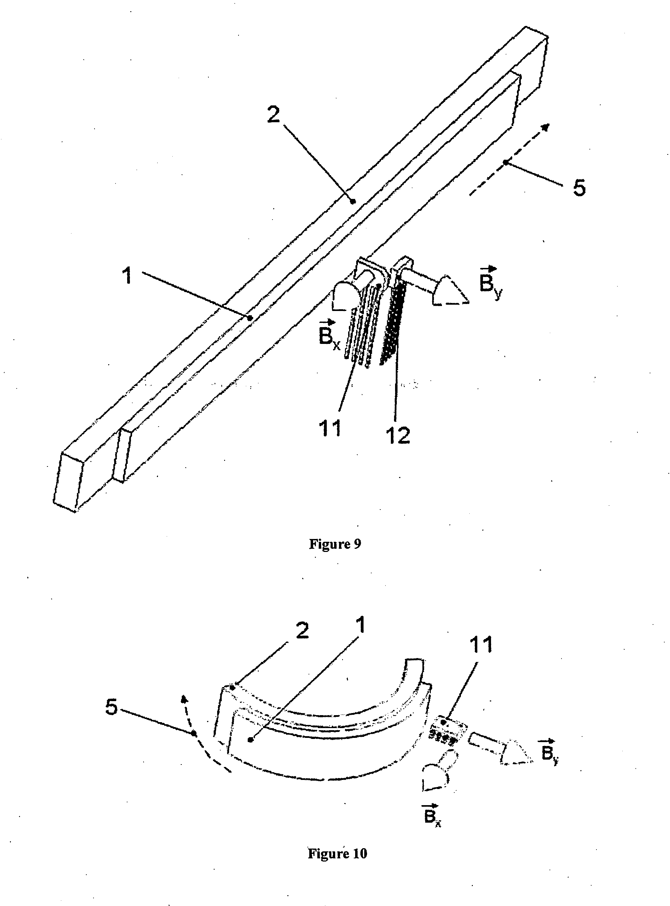

Les figures 7, 8 et 9 représentent des variantes de ce capteur, avec un aimant (1), éventuellement monté sur une culasse ferromagnétique (2), avec le même type d'aimantation, mais avec au moins deux éléments magnétosensibles (11 et 12), permettant une détection déphasée (d'un quart de période, de préférence) d'une même composante du champ magnétique - normale (figure 7) et/ou transversale ou tangentielle (figure 8). La figure 9 représente une réalisation mesurant le champ magnétique suivant les axes X et Y, en utilisant deux sondes.

La figure 10 montre un exemple d'aimant (1) monté sur un support curviligne (2) avec une sonde (11) qui mesure la composante X (tangentielle) et la composante Y (normale) sur une course suivant le support.

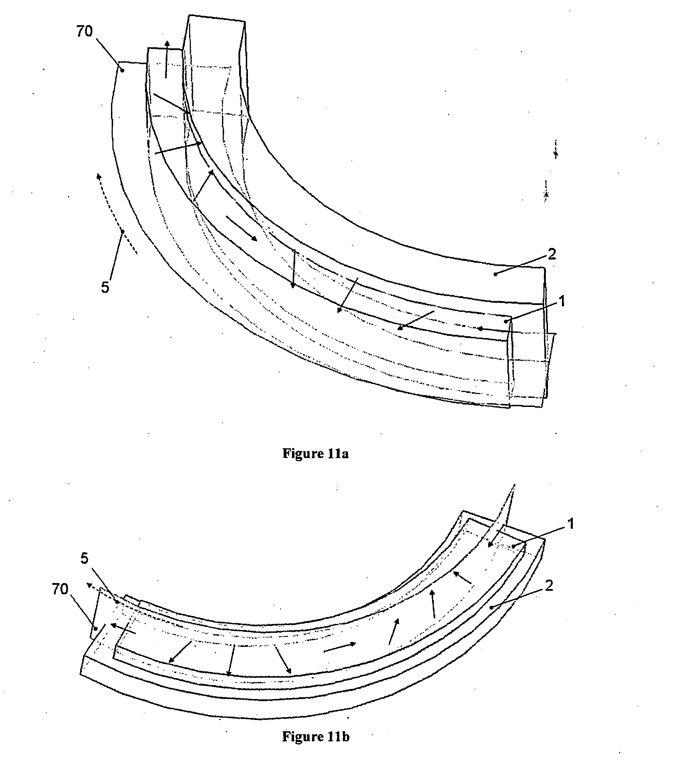

La figure 11a représente un aimant (1) aimanté sur un support comme présenté en figure 5. Ainsi l'aimantation est définie dans un plan (70) formé par la direction de déplacement (5) et une normale à cette direction, cette normale étant inscrite dans le plan de déplacement de l'aimant (1). L'aimant (1) est monté sur un support (2) ayant un diamètre quatre fois plus grand que le support d'aimantation. La direction d'aimantation est non uniforme, et a une période égale à la longueur de l'aimant qui correspond à une rotation de 90 degrés, ce qui définit la course maximale de ce capteur.

La figure 11b représente un aimant (1) aimanté sur un support comme présenté en figure 5. L'aimantation est cette fois-ci définie dans une surface (70) non plane formée par la direction de déplacement (5) et une normale à cette direction, cette normale étant perpendiculaire au plan de déplacement de l'aimant (1).

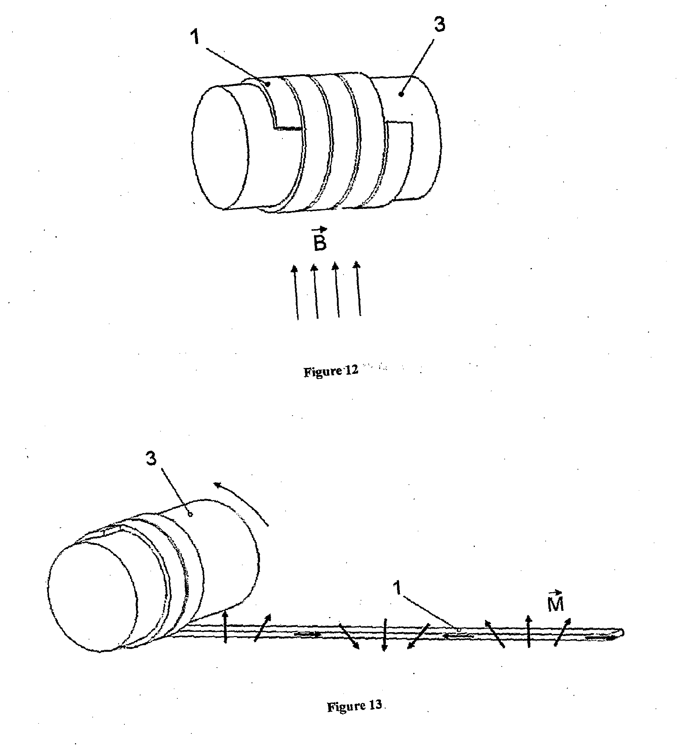

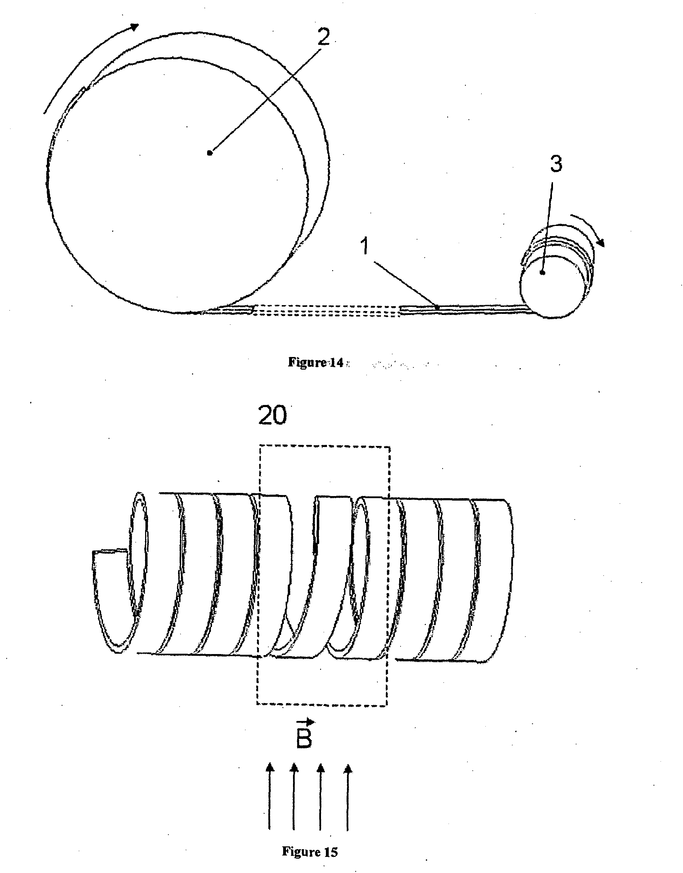

La figure 12 représente un aimant (1) enroulé plusieurs fois sur le support d'aimantation (3). Une fois déplié, il comporte plusieurs périodes d'angle d'aimantation (voir figure 13). Cela permet, par exemple, d'obtenir une course angulaire répétée plusieurs fois (par exemple : 4 fois 90 degrés). Cette technique est représentée,à la figure 14, avec l'aimantation de l'aimant (1) enroulé sur le support (2), et monté ensuite sur le support (3). Ceci est utile dans certains procédés d'assemblage où la position de course mesurée n'est pas connue à l'avance.

La figure 15 représente un capteur présentant plusieurs périodes d'angle d'aimantation, il est facilement possible d'introduire une ou plusieurs singularités (20) (des périodes d'aimantation plus ou moins longues). Cela peut, par exemple, être utile pour les capteurs incrémentaux. Dans tout ces cas, il est, bien entendu, possible d'obtenir le même résultat en utilisant plusieurs aimants.

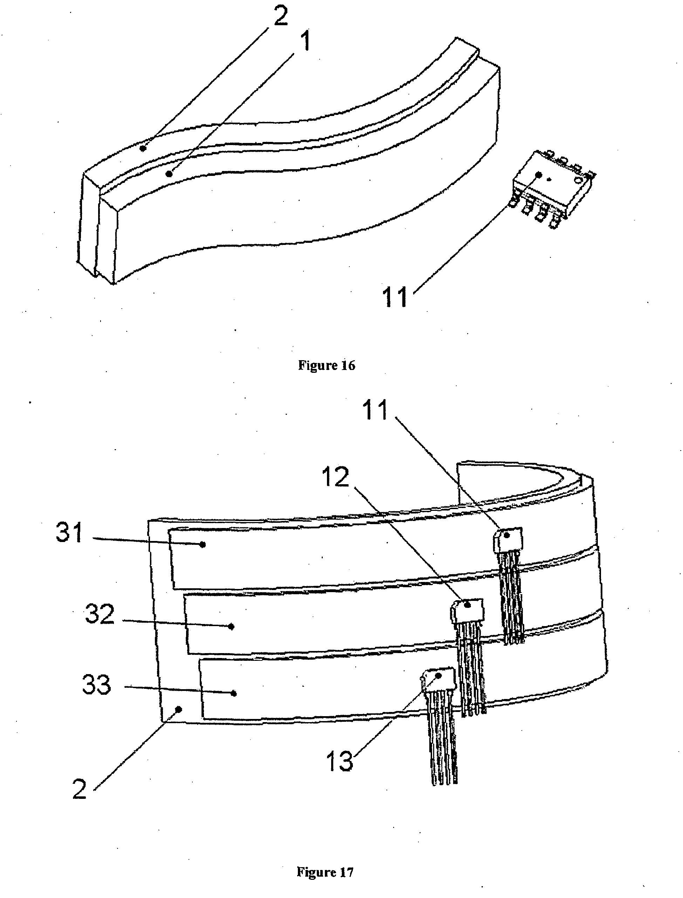

À la figure 16, l'aimant (1) est monté sur une culasse ou un support courbé ou curviligne (2), afin d'obtenir une configuration particulière du champ magnétique, mesuré par une sonde (11).

La figure 17 représente un exemple du capteur comportant plusieurs pistes aimantées différemment, avec 3 aimants (31), (32) et (33) montés sur le même support (2) et les sondes (11) (12) et (13) qui mesurent le champ magnétique de chaque aimant.

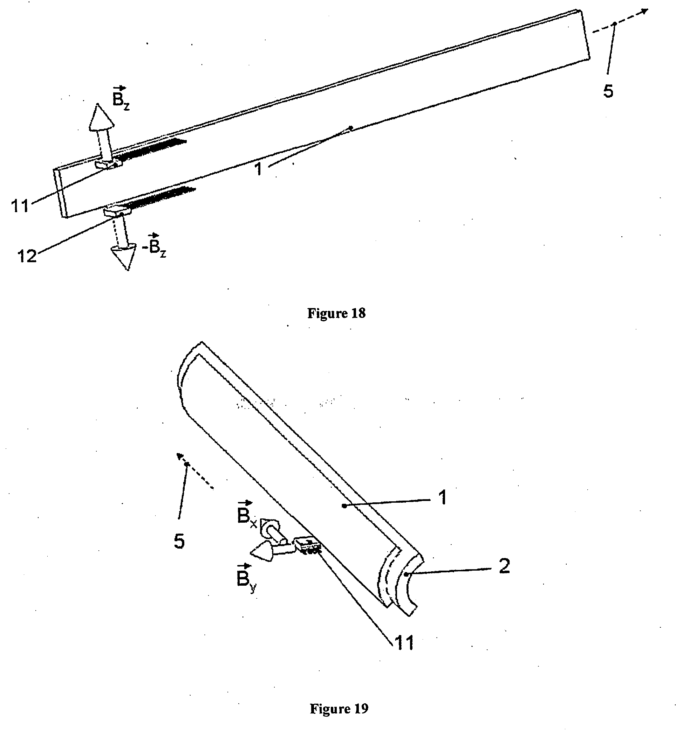

La figure 18 montre un capteur redondant avec deux sondes, (11) et (12), mesurant la composante Z du champ magnétique, pour la même position. Cela peut être utile pour annuler ou diminuer l'influence d'un champ magnétique extérieur.

La figure 19 représente une réalisation du capteur avec l'aimant (1) courbé suivant la largeur, monté sur une culasse (2), avec une sonde (11) qui mesure les composantes normale et tangentielle du champ magnétique.

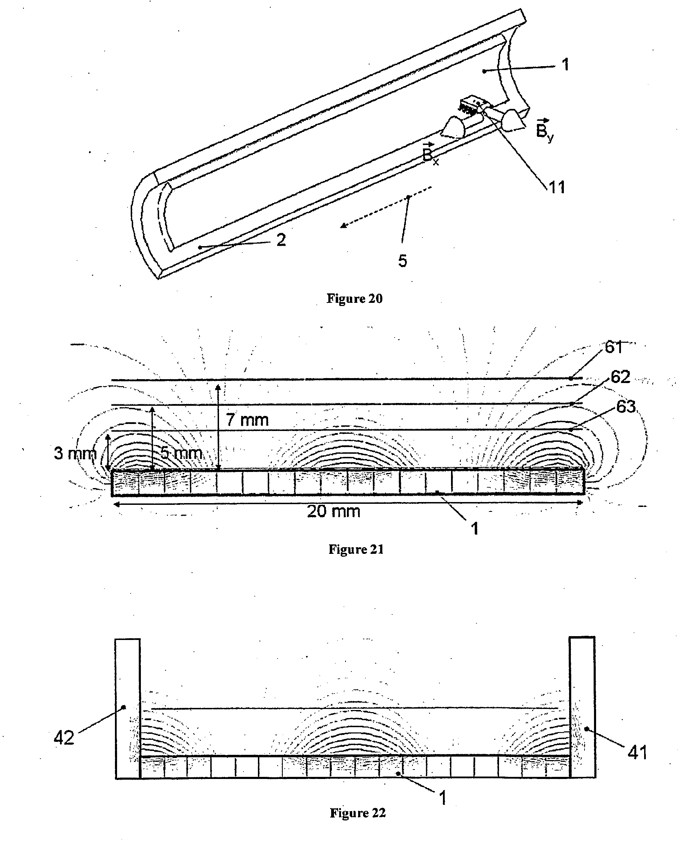

La figure 20 représente une autre réalisation du capteur avec l'aimant (1) courbé suivant la largeur, monté sur une culasse (2), qui peut servir de blindage (si elle est ferromagnétique). La sonde (11) qui mesure les composantes normale et tangentielle du champ magnétique.

Les effets de bord peuvent diminuer la course efficace du capteur. Leur influence est montrée à la figure 21. On remarque qu'il existe une distance entre l'aimant (1) et l'élément sensible (11) situé sur une ligne (62) pour laquelle les lignes de champ en fin de course sont tangentielles à la direction du déplacement. Dans ce cas, la course obtenue est approximativement égale à la longueur de l'aimant (1). Si le capteur (11) est situé sur une ligne trop proche (63) ou trop éloignée (61), les lignes de champ ne sont plus tangentes et la course doit donc être réduite pour obtenir un fonctionnement correct du capteur.

Pour certaines tailles de l'aimant, la distance nécessaire peut être trop proche et donc impossible à réaliser ou trop éloignée, avec donc peu de champ magnétique à mesurer, de l'aimant (1). Afin d'avoir une course optimale, deux pièces ferromagnétiques. (41) et (42) sont avantageusement placées à chaque extrémité de l'aimant (1), ce qui rend les lignes de champ tangentielles à la direction du déplacement comme montré en figure 22.

La course maximale théorique ainsi obtenue est égale à la longueur de l'aimant (1). Dans la réalité, il faudra prendre en compte la largeur de la sonde de mesure (11).

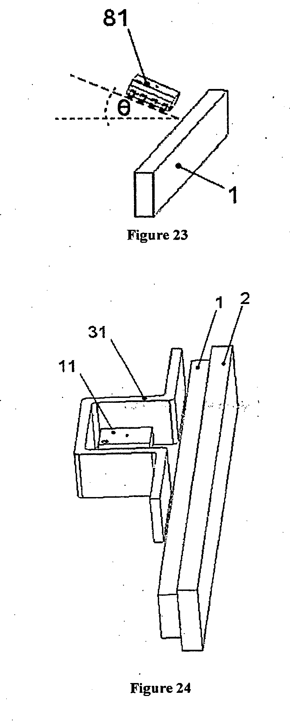

Dans le capteur présenté, il est possible d'obtenir l'angle du champ magnétique proportionnel au déplacement, il suffit d'incliner le plan de mesure par rapport au plan d'aimantation comme montré en figure 23. Il est ainsi possible, en ajustant l'angle d'inclinaison θ de la sonde (81), de mesurer le déplacement directement en calculant

$$\arctan\left(\frac{B_{y1}}{B_{x1}}\right) \quad , \quad \text{sans appliquer un gain pour compenser la différence des amplitudes.}$$

En utilisant certains types de sondes magnétorésistives, on peut obtenir directement la direction du champ magnétique, et donc le déplacement, selon la formule :

$$\alpha = \frac{1}{2}\arctan\left(\frac{V_B}{V_A}\right)$$

Dans cette figure 23, la sonde (81) peut ainsi être une sonde de Hall ou une AMR (Anisotropic Magneto Resistance).

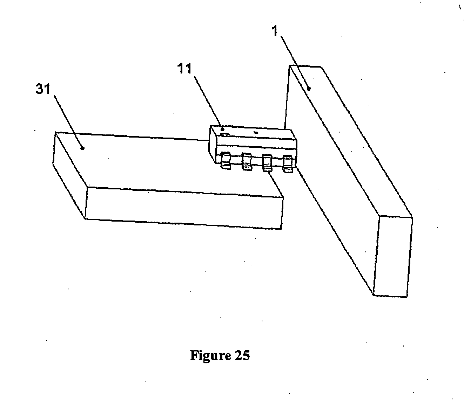

Il est possible d'ajouter un blindage ferromagnétique (31), de manière à isoler magnétiquement la partie magnétosensible (11) du capteur par rapport aux champs magnétiques extérieurs. Un exemple de blindage (31) est donné à la figure 24 et à la figure 25. Les lignes de champ extérieur passent en grande partie par le matériau ferromagnétique du blindage (11), à cause de sa faible reluctance par rapport à l'air, et n'influencent pas la mesure.

## Revendications

**1.** Capteur magnétique de déplacement rotatif, linéaire ou curviligne utilisant au moins un aimant permanent (1, 31, 32, 33) et au moins un élément magnéto-sensible (11, 12, 13, 81), mobiles l'un par rapport à l'autre suivant une direction de déplacement (5) de l'aimant (1, 31, 32, 33), **caractérisé en ce que** l'aimant (1, 31, 32, 33) présente une direction d'aimantation qui varie sensiblement linéairement suivant ladite direction de déplacement (5) de l'aimant (1, 31, 32, 33) sur une surface définie par ladite direction de déplacement (5) et une direction normale, à l'exclusion d'une aimantation diamétrale dans le cas d'un capteur rotatif, ledit aimant permanent (1, 31, 32, 33) engendrant ainsi un champ magnétique dont la composante normale (Y) d'une part, et l'une au moins des composantes tangentielle (X) et transversale (Z) d'autre part, mesurées à la surface de l'aimant, varient périodiquement de façon sinusoïdale, les composantes normale (Y) et transversale (Z) variant avec la même phase alors que la composante tangentielle (X) est déphasée d'un quart de période.

**2.** Capteur magnétique de déplacement suivant la revendication 1, **caractérisée en ce que** la surface définie est un plan.

**3.** Capteur magnétique de déplacement selon la revendication 2, **caractérisé en ce que** ledit aimant permanent (1, 31, 32, 33) est un aimant engendrant un champ magnétique dont la composante normale (Y) d'une part, et au moins l'une des composantes tangentielle (X) ou transversale (Z) d'autre part, mesurées à la surface de l'aimant, varient périodiquement avec N périodes sur la course de déplacement.

**4.** Capteur magnétique de déplacement selon la revendication 3, **caractérisé en ce que** la période N de variation du champ magnétique engendré à la surface de l'aimant (1, 31, 32, 33) est un nombre entier.

**5.** Capteur magnétique de déplacement selon la revendication 3, **caractérisé en ce que** la période N de variation du champ magnétique engendré à la surface de l'aimant (1, 31, 32, 33) est égale à 1.

**6.** Capteur magnétique de déplacement selon l'une au moins des revendications précédentes, **caractérisé en ce que** le déplacement est un déplacement linéaire.

**7.** Capteur magnétique de déplacement selon l'une au moins des revendications précédentes, **caractérisé en ce que** le déplacement est un déplacement rotatif présentant une course différente de 360˚±5˚.

**8.** Capteur magnétique de déplacement selon l'une au moins des revendications précédentes, **caractérisé en ce que** le déplacement est un déplacement curviligne.

**9.** Capteur magnétique de déplacement selon l'une au moins des revendications précédentes, **caractérisé en ce que** l'aimant (1, 31, 32, 33) est monté sur une culasse ferromagnétique (31).

**10.** Capteur magnétique de déplacement selon la revendication précédente **caractérisé, en ce que** l'aimant (1, 31, 32, 33) est encastré dans une culasse ferromagnétique (31).

**11.** capteur magnétique de déplacement selon au moins l'une des revendications précédentes, **caractérisé en que** l'aimant (1, 31, 32, 33) est réalisé en un matériau souple.

**12.** Capteur magnétique de déplacement selon l'une des revendications 5, 6 ou 7, **caractérisé en ce que** l'aimant (1, 31, 32, 33) est monté sur un support (2) courbé ou curviligne.

**13.** Capteur magnétique de déplacement selon au moins l'une des revendications précédentes, **caractérisé en ce qu'**il comporte au moins deux éléments magnétosensibles (11, 12, 13, 81), mesurant la composante du champ magnétique tangente au sens de déplacement et une combinaison linéaire de la composante normale et de la composante transversale du champ magnétique suivant la direction de déplacement (5).

**14.** Capteur magnétique de déplacement selon la revendication précédente, **caractérisé en ce qu'**il comporte un circuit de traitement du signal qui réalise un calcul d'arctangente en utilisant deux signaux électriques déphasés de 90˚ provenant d'au moins deux des éléments magnétosensibles (11, 12, 13, 81).

**15.** Capteur magnétique de déplacement selon la revendication précédente, **caractérisé en ce que** le circuit de traitement du signal permette un ajustement des gains des deux signaux utiles au décodage de l'angle.

**16.** Capteur magnétique de déplacement selon la revendication précédente, **caractérisé en ce que** le circuit de traitement du signal permette une programmation non linéaire de la fonction de transfert.

**17.** Capteur magnétique de déplacement selon au moins l'une des revendications précédentes, **caractérisé en ce qu'**il comprend plusieurs aimants (1, 31, 32, 33) définissant plusieurs pistes ayant chacune une direction d'aimantation continûment variable suivant la direction de déplacement.

**18.** Capteur magnétique de déplacement selon au moins l'une des revendications précédentes, **caractérisé en ce que** la direction d'aimantation présente plusieurs périodes sur la course mesurée.

**19.** Capteur magnétique de déplacement selon la revendication précédente, **caractérisé en ce qu'**il comporte au moins deux périodes d'aimantation de longueur différente.

**Claims**

**1.** A linear or curved rotating displacement magnetic sensor using at least one permanent magnet (1, 31, 32, 33) and at least one magneto-sensitive element (11, 12, 13, 81), movable with respect to each other according to a direction of displacement (5) of the magnet (1, 31, 32, 33), **characterized in that** the magnet (1, 31, 32, 33) has a direction of magnetization which varies substantially linearly according to said direction of displacement (5) of the magnet (1, 31, 32, 33) on a surface defined by said direction of displacement (5) and a normal direction, with the exclusion of a diametral magnetization in the case of a rotating sensor, said permanent magnet (1, 31, 32, 33) thus generating a magnetic field, the normal component (Y) of which, on the one hand, and at least one of the tangential (X) and transversal (Z) components of which, on the other hand, as measured at the surface of the magnet, periodically vary sinusoidally, with the normal (Y) and transversal (Z) components varying with the same phase, whereas the tangential component (X) is phase-shifted by a quarter of a period.

2. A displacement magnetic sensor according to claim 1, **characterized in that** the defined surface is a plane.

3. A displacement magnetic sensor according to claim 2, **characterized in that** said the permanent magnet (1, 31, 32, 33) is a magnet generating a magnetic field, the normal component (Y) of which, on the one hand, and at least one of the tangential (X) or transversal (Z) components of which, on the other hand, as measured at the surface of the magnet, periodically vary with N periods on the displacement travel.

4. A displacement magnetic sensor according to claim 3, **characterized in that** the period N of variation of the magnetic field generated at the surface of the magnet (1, 31, 32, 33) is an integer.

5. A displacement magnetic sensor according to claim 3, **characterized in that** the period N of variation of the magnetic field generated at the surface of the magnet (1, 31, 32, 33) is equal to 1.

6. A displacement magnetic sensor according to at least one of the preceding claims, **characterized in that** the displacement is a linear displacement.

7. A displacement magnetic sensor according to at least one of the preceding claims, **characterized in that** the displacement is a rotating displacement along a different travel of $360° \pm 5°$.

8. A displacement magnetic sensor according to at least one of the preceding claims, **characterized in that** the displacement is a curved displacement.

9. A displacement magnetic sensor according to at least one of the preceding claims, **characterized in that** the magnet (1, 31, 32, 33) is mounted on a ferromagnetic magnet support assembly (31).

10. A displacement magnetic sensor according to the preceding claim, **characterized in that** the magnet (1, 31, 32, 33) is embedded in a ferromagnetic magnet support assembly (31).

11. A displacement magnetic sensor according to at least one of the preceding claims, **characterized in that** the magnet (1, 31, 32, 33) is made of a soft material.

12. A displacement magnetic sensor according to one of claims 5, 6 or 7, **characterized in that** the magnet (1, 31, 32, 33) is mounted on a bent or curved support (2).

13. A displacement magnetic sensor according to at least one of the preceding claims, **characterized in that** it includes at least two magnetosensitive elements (11, 12, 13, 81), measuring the component of the magnetic filed tangent to the direction of displacement and a linear combination of the normal component and the transversal component of the magnetic field according to the direction of displacement (5).

14. A displacement magnetic sensor according to the preceding claim, **characterized in that** it includes a signal processing circuit which computes an arc tan using two electric signals phase-shifted by 90° originating from at least two of the magnetosensitive elements (11, 12, 13, 81).

15. A displacement magnetic sensor according to the preceding claim, **characterized in that** the signal processing circuit allows an adjustment of the gains of the two signals useful to the angle decoding.

16. A displacement magnetic sensor according to the preceding claim, **characterized in that** the signal processing circuit allows a non linear programming of the transfer function.

17. A displacement magnetic sensor according to at least one of the preceding claims, **characterized in that** it includes several magnets (1, 31, 32, 33) defining several tracks, each having a continuously variable direction of magnetization according to the direction of displacement.

**18.** A displacement magnetic sensor according to at least one of the preceding claims, **characterized in that** the direction of magnetization has several periods on the measured travel.

**19.** A displacement magnetic sensor according to the preceding claim, **characterized in that** it includes at least two magnetization periods having a different length.

**Patentansprüche**

**1.** Drehender, geradliniger oder gekrümmter magnetischer Bewegungssensor mit Benutzung von zumindest einem Permanentmagneten (1, 31, 32, 33) und zumindest einem magnetisch beeinflußbaren Element (11, 12, 13, 81), die untereinander in einer Bewegungsrichtung (5) des Magneten (1, 31, 32, 33) beweglich sind, **dadurch gekennzeichnet, daß** der Magnet (1, 31, 32, 33) eine Magnetisierungsrichtung aufweist, die deutlich linear in der besagten Bewegungsrichtung (5) des Magneten (1, 31, 32, 33) auf einer Fläche variiert, die von der besagten Bewegungsrichtung (5) und einer normalen Richtung beschrieben wird, dies unter Ausschluß einer diametralen Magnetisierung im Fall eines Drehsensors, wobei der besagte Permanentmagnet (1, 31, 32, 33) somit ein Magnetfeld schafft, dessen normale Komponente (Y) einerseits und zumindest eine der tangentialen (X) oder der querliegenden (Z) Komponente andererseits, die an der Oberfläche des Magneten gemessen werden, periodisch sinusartig schwanken, wobei die normale (Y) und die querliegende (Z) Komponente mit der gleichen Phase variieren, während die tangentiale Komponente (X) um eine Viertelperiode phasenverschoben ist.

**2.** Magnetischer Bewegungssensor nach Anspruch 1, **dadurch gekennzeichnet, daß** die beschriebene Fläche eine Ebene ist.

**3.** Magnetischer Bewegungssensor nach Anspruch 2, **dadurch gekennzeichnet, daß** der besagte Permanentmagnet (1, 31, 32, 33) ein Magnet ist, der ein Magnetfeld schafft, dessen normale Komponente (Y) einerseits und zumindest eine der tangentialen (X) oder der querliegenden (Z) Komponente andererseits, die an der Oberfläche des Magneten gemessen werden, periodisch mit N Perioden auf der Bewegungsstrecke schwanken.

**4.** Magnetischer Bewegungssensor nach Anspruch 3, **dadurch gekennzeichnet, daß** die Periode N der Schwankung des auf der Oberfläche des Magneten (1, 31, 32, 33) geschaffenen Magnetfelds eine ganze Zahl ist.

**5.** Magnetischer Bewegungssensor nach Anspruch 3, **dadurch gekennzeichnet, daß** die Periode N der Schwankung des auf der Oberfläche des Magneten (1, 31, 32, 33) geschaffenen Magnetfelds gleich 1 ist.

**6.** Magnetischer Bewegungssensor nach zumindest einem der vorstehenden Ansprüche, **dadurch gekennzeichnet, daß** die Bewegung eine lineare Bewegung ist.

**7.** Magnetischer Bewegungssensor nach zumindest einem der vorstehenden Ansprüche, **dadurch gekennzeichnet, daß** die Bewegung eine drehende Bewegung ist, die eine Strecke unterschiedlich von 360˚ ± 5˚ aufweist.

**8.** Magnetischer Bewegungssensor nach zumindest einem der vorstehenden Ansprüche, **dadurch gekennzeichnet, daß** die Bewegung eine gekrümmte Bewegung ist.

**9.** Magnetischer Bewegungssensor nach zumindest einem der vorstehenden Ansprüche, **dadurch gekennzeichnet, daß** der Magnet (1, 31, 32, 33) auf ein ferromagnetisches Joch (31) montiert ist.

**10.** Magnetischer Bewegungssensor nach vorstehendem Anspruch, **dadurch gekennzeichnet, daß** der Magnet (1, 31, 32, 33) in ein ferromagnetisches Joch (31) eingebaut ist.

**11.** Magnetischer Bewegungssensor nach zumindest einem der vorstehenden Ansprüche, **dadurch gekennzeichnet, daß** der Magnet (1, 31, 32, 33) aus einem weichen Material realisiert ist.

**12.** Magnetischer Bewegungssensor nach einem beliebigen der vorstehenden Ansprüche 5, 6 oder 7, **dadurch gekennzeichnet, daß** der Magnet (1, 31, 32, 33) auf einen gekrümmten oder kurvenförmigen Träger (2) montiert ist.

**13.** Magnetischer Bewegungssensor nach zumindest einem der vorstehenden Ansprüche, **dadurch gekennzeichnet, daß** er mindestens zwei magnetisch beeinflußbare Elemente (11, 12, 13, 81) umfaßt, die die Komponente des Magnetfelds messen, die in der Bewegungsrichtung tangiert, und eine lineare Kombination der normalen Komponente und der querliegenden Komponente des Magnetfelds in Bewegungsrichtung (5).

14. Magnetischer Bewegungssensor nach vorstehendem Anspruch, **dadurch gekennzeichnet, daß** er einen Schaltkreis für die Verarbeitung des Signals umfaßt, der eine Berechnung der Bogentangente durchführt, indem er zwei elektrische um 90˚ phasenverschobene Signale verwendet, die aus mindestens zwei der magnetisch beeinflußbaren Elemente (11, 12, 13, 81) kommen.

15. Magnetischer Bewegungssensor nach vorstehendem Anspruch, **dadurch gekennzeichnet, daß** der Schaltkreis für die Verarbeitung des Signals eine Anpassung der Verstärkungen der beiden für die Entschlüsselung des Winkels nützlichen Signale ermöglicht.

16. Magnetischer Bewegungssensor nach vorstehendem Anspruch, **dadurch gekennzeichnet, daß** der Schaltkreis für die Verarbeitung des Signals eine nicht lineare Programmierung der Transferfunktion ermöglicht.

17. Magnetischer Bewegungssensor nach zumindest einem der vorstehenden Ansprüche, **dadurch gekennzeichnet, daß** er mehrere Magneten (1, 31, 32, 33) umfaßt, die mehrere Spuren beschreiben, die jeweils eine Magnetisierungsrichtung haben, die kontinuierlich je nach Bewegungsrichtung variabel ist.

18. Magnetischer Bewegungssensor nach zumindest einem der vorstehenden Ansprüche, **dadurch gekennzeichnet, daß** die Magnetisierungsrichtung auf dem gemessenen Weg mehrere Perioden aufweist.

19. Magnetischer Bewegungssensor nach vorstehendem Anspruch, **dadurch gekennzeichnet, daß** er mindestens zwei Magnetisierungsperioden unterschiedlicher Länge umfaßt.

Figure 1

Figure 2

Figure 3

Figure 4

Figure 5

Figure 6

Figure 7

Figure 8

Figure 9

Figure 10

70

5

2

1

**Figure 11a**

5

70

1

2

**Figure 11b**

1

3

$\vec{B}$

Figure 12

3

1

$\vec{M}$

Figure 13

Figure 14

$\vec{B}$

Figure 15

Figure 16

Figure 17

Figure 18

Figure 19

Figure 20

Figure 21

Figure 22

81

Figure 23

31

11

1  2

Figure 24

Figure 25

**EP 1 989 505 B1**

**Documents brevets cités dans la description**

- FR 2691534
- US 06211668 B
- US 6731108 B
- US 6960974 B
- WO 200401537 A
- US 6545463 B
- EP 1074818 A
- WO 0004339 A